# EUROPÄISCHE PATENTSCHRIFT

(11) **EP 1 828 581 B1**
(45) Veröffentlichungstag und Bekanntmachung des Hinweises auf die Patenterteilung: **07.05.2008**
(21) Anmeldenummer: 05817028.3
(22) Anmeldetag: 28.11.2005
(51) Int. Cl.: F02D 41/20, H01L 41/04

(54) **VERFAHREN UND VORRICHTUNG ZUM ANSTEUERN EINER KAPAZITIVEN LAST**
METHOD AND DEVICE FOR CONTROLLING A CAPACITIVE LOAD
PROCEDE ET DISPOSITIF DE COMMANDE D'UNE CHARGE CAPACITIVE

(30) Priorität: 23.12.2004 DE 102004062385
(43) Veröffentlichungstag der Anmeldung: 05.09.2007
(73) Patentinhaber: SIEMENS AKTIENGESELLSCHAFT, 80333 München (DE)
(72) Erfinder: AUGESKY, Christian Georg, 93055 Regensburg (DE); GÖTZENBERGER, Martin, 85051 Ingolstadt (DE)
(86) Internationale Anmeldenummer: PCT/EP2005/056250
(87) Internationale Veröffentlichungsnummer: WO 2006/069869

(56) Entgegenhaltungen:
- DE-A1- 10 114 421
- DE-A1- 19 944 733
- DE-A1-1102004 007 39
- DE-A1-4102004 009 61

## Beschreibung

Die vorliegende Erfindung betrifft ein Verfahren und eine Vorrichtung zum Ansteuern einer kapazitiven Last, insbesondere eines piezoelektrischen Aktors für ein Einspritzventil einer Brennkraftmaschine.

Beim Ansteuern einer kapazitiven Last wie eines Piezoaktors, d.h. beim Aufladen und Entladen der kapazitiven Last mittels eines elektrischen Laststroms, werden erhebliche Anforderungen an die Ansteuerelektronik gestellt. Eine Ausführungsform eines kapazitiven Stellglieds stellt ein piezoelektrischer Aktor (kurz: Piezoaktor) dar, wie er z. B. zur Betätigung eines Einspritzventils Verwendung findet. Ein solches Einspritzventil wird in Brennkraftmaschinen zum Einspritzen von Kraftstoff (z. B. Benzin, Diesel etc.) in einem Brennraum eingesetzt. Hierbei werden sehr hohe Anforderungen an ein exaktes und reproduzierbares Öffnen und Schließen des Ventils und damit auch an die Ansteuerelektronik gestellt. So müssen dabei Spannungen im Bereich von bis zu mehreren 100V und kurzzeitig Lastströme zum Laden und Entladen von mehr als 10A bereitgestellt werden. Die Ansteuerung erfolgt meist in Bruchteilen von Millisekunden. Gleichzeitig sollte während dieser Ladevorgänge und Entladevorgänge der Strom und die Spannung dem Stellglied möglichst kontrolliert zugeführt werden.

Aus der DE 199 44 733 A1 ist eine Schaltungsanordnung zur Ansteuerung eines Piezoaktors bekannt, bei welcher der Aktor von einem Ladekondensator über einen Transformator geladen wird. Hierzu wird ein auf der Primärseite des Transformators angeordneter Ladeschalter mit einem pulsweitenmodulierten Steuersignal angesteuert. Der Ladeschalter, wie auch ein Entladeschalter sind dort als steuerbare Halbleiterschalter ausgeführt. Dem Piezoaktor werden beim Laden und Entladen vorgegebene Energiepakete zugeführt bzw. entnommen. Werden Energiepakete benötigt, die kleiner als die vorgegebenen Energiepakete sind, so benötigt die bekannte Schaltungsanordnung zur zeitlichen Mittelung der dem Piezoaktor zugeführten und wieder entnommenen Energie ein stark wirksames Ausgangsfilter. Die genaue und reproduzierbare Einstellung eines gewünschten Ladeausmaßes ist bei der bekannten Schaltungsanordnung daher problematisch.

Es ist eine Aufgabe der vorliegenden Erfindung, ein Verfahren und eine Vorrichtung zum Ansteuern einer kapazitiven Last anzugeben, die sich durch eine hohe Auflösung und Reproduzierbarkeit auszeichnen.

Diese Aufgabe wird gelöst mit einem Verfahren nach Anspruch 1 bzw. einer Vorrichtung nach Anspruch 6. Die abhängigen Ansprüche betreffen vorteilhafte Weiterbildungen der Erfindung.

Erfindungsgemäß ist ein Verfahren zum Ansteuern einer kapazitiven Last, insbesondere eines Piezoaktors für ein Einspritzventil einer Brennkraftmaschine vorgesehen, umfassend Ladevorgänge und Entladevorgänge zum Aufladen bzw. Entladen der kapazitiven Last mittels eines Laststroms, der zwischen einer Maximumvorgabe und einer Minimumvorgabe pendeln gelassen wird, wobei während eines Ladevorgangs die Maximumvorgabe in einem ersten Schritt monoton ansteigt, in einem zweiten Schritt im Wesentlichen konstant bleibt und in einem dritten Schritt monoton abfällt, wobei während eines Entladevorgangs die Minimumvorgabe in einem ersten Schritt monoton abfällt, in einem zweiten Schritt im Wesentlichen konstant bleibt und in einem dritten Schritt monoton ansteigt, wobei zur Einstellung eines gewünschten Ladeausmaßes eine variable zeitliche Überlappung des dritten Schritts des Ladevorgangs und des ersten Schritts des nachfolgenden Entladevorgangs vorgesehen ist.

Bei der erfindungsgemäßen Ansteuerung wird der Laststrom zwischen zwei Vorgabewerten pendeln gelassen, was etwa durch eine einfache Messung des tatsächlichen Laststroms und darauf basierender Ansteuerung von Lade- und Entladeschaltern bei vielfältig an sich bekannten Ansteuerkonzepten realisierbar ist. Das gewünschte Ladeausmaß (z. B. am Ende eines Ladevorgangs in der kapazitiven Last eingespeicherte elektrische Ladung) kann durch die erfindungsgemäß jeweils in drei Schritten gegliederten Lade- und Entladevorgänge mit hoher Auflösung und gut reproduzierbar eingestellt werden, da hierfür eine Reihe zu variierender Parameter zur Verfügung stehen, wie es unten noch erläutert wird. Als ein solcher Parameter wird gemäß der Erfindung zur Einstellung eines gewünschten Ladeausmaßes eine zeitliche Überlappung des dritten Schritts des Ladevorgangs und des ersten Schritts des nachfolgenden Entladevorgangs herangezogen. Die Einstellung der maximal in die kapazitive Last eingespeicherten Energie bzw. Ladung kann hierbei auch bei vergleichsweise einfach vorgesehenen Ansteuerschaltungskonzepten ohne nennenswerte Quantisierung, d.h. im Wesentlichen stufenlos, variiert werden.

In einer Ausführungsform ist vorgesehen, dass die Ansteuerung die Möglichkeit vorsieht, auch bei einem Übergang von einem Entladevorgang zu einem nachfolgenden Ladevorgang eine zeitliche Überlappung des dritten Schritts des Entladevorgangs mit dem ersten Schritt des nachfolgenden Ladevorgangs vorzusehen und abhängig von Betriebsparametern zu variieren.

Wenn es sich bei der kapazitiven Last um den Piezoaktor eines Kraftstoffinjektors einer Brennkraftmaschine handelt, so kann dementsprechend ein exaktes und reproduzierbares Öffnen und Schließen des Einspritzventils erreicht werden. in diesem Zusammenhang ist erwähnenswert, dass zur Einhaltung künftiger Abgasemissionsgrenzwerte die Anzahl von Kraftstoffeinspritzvorgängen pro Verbrennungstakt erhöht werden muss (Einspritzsequenzen mit Vor-, Haupt- und Nacheinspritzung(en)). Dadurch werden die einzelnen Einspritzzeiten und somit auch die Ansteuerzeiten für den Piezoaktor immer kürzer, was zusätzliche Anforderungen an die Ansteuerelektronik stellt.

In einer Weiterbildung der Erfindung ist vorgesehen, dass zur Einstellung des Ladeausmaßes ferner die beim Ladevorgang am Ende des ersten Schritts erreichte Maximumvorgabe und/oder die zeitliche Dauer des zweiten Schritts variiert wird. Damit werden zur Einstellung des Ladeausmaßes vorteilhaft ein oder zwei weitere Parameter genutzt.

Die Einstellung des Ladeausmaßes kann besonders exakt und in schaltungstechnisch einfacher Weise erreicht werden, wenn der oder die zu variierenden Parameter aus einem Kennlinienfeld ausgelesen werden. Bei der Ansteuerung eines Piezoaktors eines Kraftstoffinjektors können solche Parameter aus dem Kennlinienfeld beispielsweise in Abhängigkeit von einer Ansteuervorgabe (z. B. gewünschte Einspritzmenge) und weiteren gemessenen oder aus gemessenen Größen abgeleiteten Größen vorbestimmt werden. Das Kennlinienfeld kann beispielsweise die Zuordnung verschiedener Betriebsparameter der Brennkraftmaschine, wie z. B. Drehzahl und/oder Last zur benötigten Kraftstoffmenge und somit zur gewünschten Piezoladung enthalten und kann beispielsweise experimentell oder auch rechnerisch ermittelt und abgespeichert werden.

In einer bevorzugten Ausführungsform ist vorgesehen, dass während des Ladevorgangs die Minimumvorgabe im Wesentlichen Null ist und/oder während des Entladevorgangs die Maximumvorgabe im Wesentlichen Null ist. Damit wird während des ersten Schritts des Ladevorgangs der Laststrom im Mittel allmählich erhöht, während des zweiten Schritts in etwa konstant gehalten und während des dritten Schritts wieder reduziert. Alternativ oder zusätzlich gilt Entsprechendes für den Entladevorgang. Im Anwendungsfall der Kraftstoffeinspritzung an einer Brennkraftmaschine kann durch die allmähliche Änderung der Ladung über der Zeit im Anfangs- und Endverlauf des Ladevorgangs bzw. des Entladevorgangs ein Überschwingen des Stellglieds verhindert werden. Außerdem können damit störende mechanische oder akustische Effekte reduziert werden.

Bevorzugt besitzt der zeitliche Verlauf der Maximumvorgabe während des Ladevorgangs und/oder der zeitliche Verlauf der Minimumvorgabe während des Entladevorgangs in etwa die Form eines Trapezes. Bei dieser Vorgabeform kann die Einstellung des gewünschten Ladeausmaßes in besonders einfacher Weise durch Veränderung von Parametern dieser Trapezform erfolgen. Dies optional zu der variablen zeitlichen Überlappung des dritten Schritts des Ladevorgangs und des ersten Schritts des nachfolgenden Entladevorgangs. Neben der erwähnten Trapezform der Maximumvorgabe und/oder Minimumvorgabe kommen im Rahmen der Erfindung selbstverständlich auch beliebige andere Kurvenformen mit monotonem Anfang/Ende in Betracht, welche die zeitliche Überlappung beim Übergang vom Laden zum Entladen ermöglichen.

Die Maximumvorgabe wie auch die Minimumvorgabe können beispielsweise durch eine digitale Steuereinheit erzeugt werden, etwa basierend auf dem Auslesen einer Nachschlagtabelle ("look-up table").

In einer bevorzugten Ausführungsform umfasst die erfindungsgemäße Ansteuervorrichtung:
- eine Endstufe zur Bereitstellung des Laststroms basierend auf einem der Endstufe eingegebenen Steuersignal, und
- eine Steuereinheit zur Bereitstellung des Steuersignals basierend auf einer Ansteuervorgabe und wenigstens auf einem Messwert des tatsächlichen Laststroms.

Die hierbei verwendete Endstufe kann in vielfältiger Weise realisiert sein. Geeignete Schaltungskonzepte sind dem Fachmann allgemein bekannt. In einer Ausführungsform ist die Endstufe beispielsweise als ein Hoch- und Tiefsetzsteller (Buck-Boost-Konverter) ausgeführt. Hierbei können ein Ladeschalter und ein Entladeschalter als Halbbrücke zwischen den Anschlüssen einer Versorgungsspannungsquelle angeordnet sein, um an einem Abgriff zwischen den Schaltern eine Lastansteuerspannung einzustellen, welche z. B. über ein strombegrenzendes Bauteil (z. B. Drosselspule) die kapazitive Last beaufschlagt. Bei Verwendung von Halbleiterschaltern für den Lade- und Entladeschalter sind diese beispielsweise als Leistungs-MOS-Feldeffekttransistoren (MOSFETs) oder als Insulated-Gate-Bipolar-Transistoren (IGBTs) ausgebildet. Die Steueranschlüsse dieser Halbleiterschalter werden dann von der Steuereinheit mit dem Steuersignal beaufschlagt.

Die Erfindung wird nachfolgend anhand von Ausführungsbeispielen mit Bezug auf die beigefügten Zeichnungen näher beschrieben. Es stellen dar:
- Fig. 1: ist ein Blockschaltbild einer Ansteuerschaltung,
- Fig. 2: ist ein konkreteres Beispiel einer Ansteuerschaltung,
- Fig. 3: zeigt zeitliche Verläufe einiger Signale im Betrieb der Schaltung nach Fig. 2, und
- Fig. 4: veranschaulicht die im Betrieb der Schaltung nach Fig. 2 vorgesehene zeitliche Überlappung des Endes eines Ladevorgangs mit dem Beginn eines nachfolgenden Entladevorgangs.

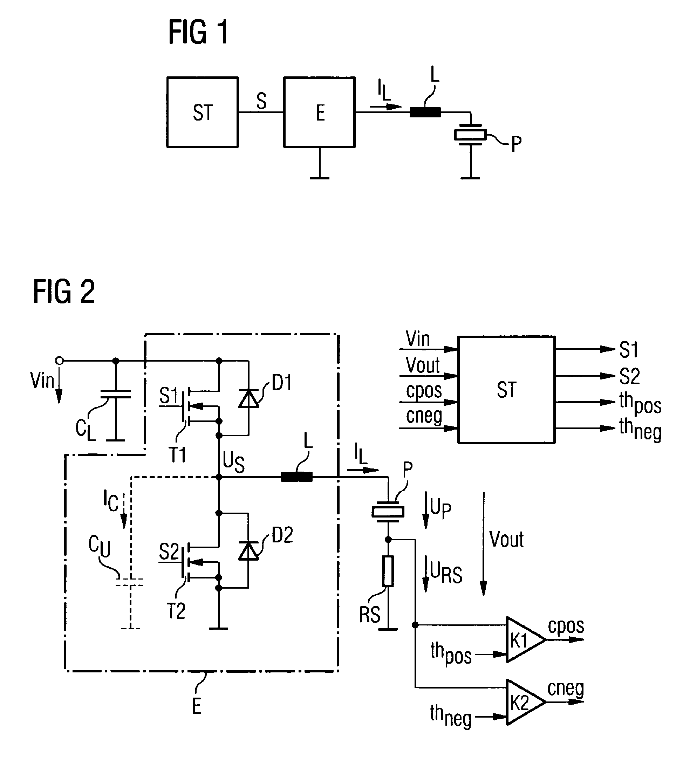

Fig. 1 zeigt ein Blockschaltbild einer Schaltung zum Ansteuern eines Piezoaktors P, der über eine Induktivität L mit einer Endstufe E verbunden ist. Die Endstufe E liefert einen den Piezoaktor P über die Induktivität L aufladenden bzw. entladenden Strom I_{L}. Die Endstufe E kann als herkömmlicher Schaltwandler, bzw. als Buck-Boost-, als Flyback- oder als SEPIC-Konverter ausgeführt sein und liefert den Strom abhängig von einem Steuersignal S (z. B. eine oder mehrere Steuerspannungen), das von einer Steuereinheit ST basierend auf einer Ansteuervorgabe und unter Berücksichtigung von Messgrößen, die im Bereich der Endstufe E und/oder dem Bereich des Piezoaktors P (z. B. Piezospannung und/oder Piezostrom) ermittelt werden.

Fig. 2 zeigt ein Ausführungsbeispiel einer Ansteuerschaltung gemäß Fig. 1.

Eine Endstufe E liefert einen Laststrom I_{L} ausgehend von einem Schaltungsknoten (Spannung Us) wieder über eine Induktivität L zu einem Piezoaktor P, der in Reihenschaltung mit einem Strommesswiderstand RS angeordnet ist.

Die am Widerstand RS abfallende Spannung U_{RS} ist repräsentativ für den beim Laden und Entladen des Piezoaktors P fließenden Laststrom I_{L}. Zusammen mit der am Piezoaktor P abfallenden Piezospannung Uₚ ergibt sich eine Ausgangsspannung Vₒᵤₜ. Da die Endstufe E von einer Eingangsspannung Vᵢₙ versorgt wird, kann die Schaltungsanordnung auch als gesteuerter Spannungswandler betrachtet werden, der die Spannung Vᵢₙ in die Spannung Vₒᵤₜ wandelt.

Der Widerstand RS besitzt als so genannter Shunt einen sehr kleinen Widerstandswert, so dass in der Praxis die daran abfallende Spannung gegenüber der Piezospannung vernachlässigbar ist.

Die Messspannung U_{RS} wird zu zwei Komparatoren K1 und K2 geführt, um diese für den Laststrom I_{L} repräsentative Spannung mit einem positiven Schwellwert thₚₒₛ und einem negativen Schwellwert th_{neg} zu vergleichen. Die am Ausgang der Komparatoren dem Vergleichsergebnis entsprechenden Signale sind als cₚₒₛ und c_{neg} bezeichnet.

Der die Piezoansteuerspannung Us bereitstellende Schaltungsknoten ist ein Mittelabgriff einer Serienschaltung aus einem Ladeschalter T1 und einem Entladeschalter T2. Diese Schalter T1 und T2 sind vorteilhaft jeweils als Transistor, speziell als N-Kanal-MOSFET ausgebildet. Parallel zu diesen Schaltern ist jeweils eine Freilaufdiode D1 bzw. D2 angeordnet. Bei Verwendung von MOSFETs als Schalter kann auf diese Dioden auch verzichtet werden, da diese Transistoren strukturbedingt eine solche integrierte Diode aufweisen. In diesem Fall wären externe Freilaufdioden optional. Die Reihenschaltung aus T1 und T2 wird mit der Eingangsspannung Vᵢₙ beaufschlagt. Parallel zum Ladeschalter T1 ist ein Ladeenergiespeicher bzw. Kondensator C_{L} angeordnet. Alternativ oder zusätzlich könnte auch ein Umschwingenergiespeicher bzw. -kondensator parallel zum Entladeschalter T2 angeordnet werden. Ein solcher Umschwingkondensator C_{U} ist in der Figur gestrichelt eingezeichnet.

Eine Steuereinheit ST initiiert und steuert die von der Endstufe E auszuführenden Ladevorgänge und Entladevorgänge zum Aufladen bzw. Entladen des Aktors P mittels des Laststroms I_{L}. Zu diesem Zweck liefert die Steuereinheit ST ausgangsseitig Steuersignale S₁ und S₂, die den Steueranschlüssen (Gates) der Transistoren T2 und T2 zugeführt werden.

Eingangsseitig werden der Steuereinheit ST die Signale Vᵢₙ, Vₒᵤₜ, cₚₒₛ und c_{neg} geliefert.

Im dargestellten Ausführungsbeispiel werden die zum Vergleich des tatsächlichen Laststroms I_{L} mit einer Maximumvorgabe und einer Minimumvorgabe erforderlichen Schwellwerte thₚₒₛ und th_{neg} ebenfalls von der Steuereinheit ST bereitgestellt.

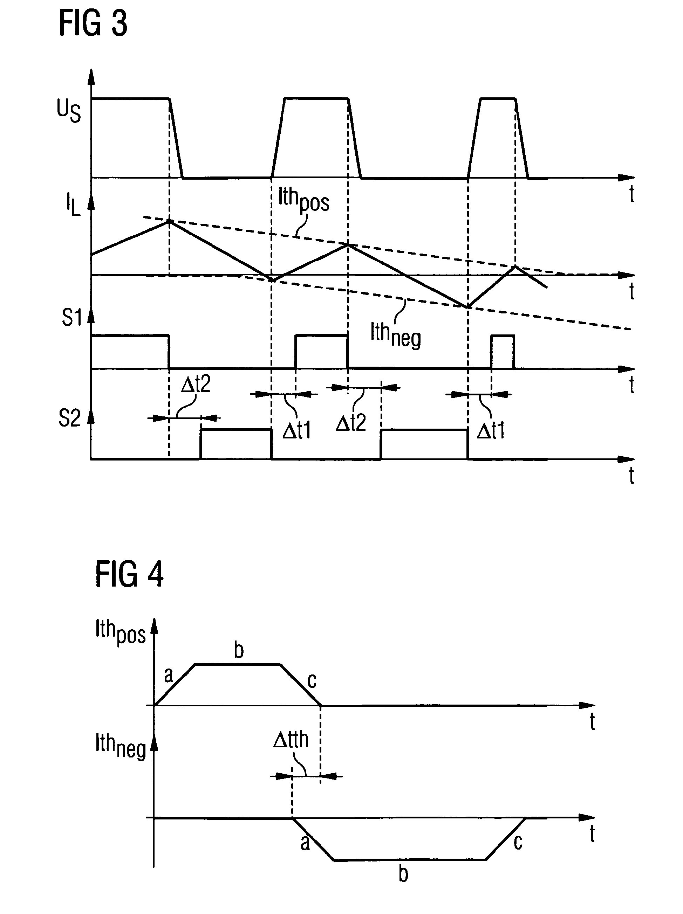

Fig. 3 veranschaulicht anhand eines Zeitverlaufsdiagramms (Zeit: t) den Übergang von einem Ladevorgang zu einem nachfolgenden Entladevorgang.

Am Anfang des dargestellten Zeitverlaufs ist der Ladeschalter T1 geschlossen und der Entladeschalter T2 geöffnet (vgl.

Steuersignale S₁ und S₂ in der Figur). Dementsprechend ergibt sich ein durch die Eingangsspannung Vᵢₙ vorgegebener Maximalwert der Knotenspannung Us, die über die Induktivität L den Aktor P beaufschlagt. In dieser Phase steigt der in den Aktor fließende Laststrom I_{L} stetig an.

Sobald der Laststrom eine Maximumvorgabe Ithₚₒₛ erreicht, was über das Komparatorausgangssignal cₚₒₛ erfasst wird, veranlasst die Steuereinheit ein Öffnen des Ladeschalters T1 und - nach einer vorgegebenen zeitlichen Verzögerung Δt2 - ein Schließen des Entladeschalters T2. Unmittelbar nach dem Öffnen des Schalters T1 wird der Laststrom zunächst über die Freilaufdiode D2 geliefert. Die zeitliche Verzögerung Δt2 ermöglicht ein "weiches" Zuschalten des parallel hierzu angeordneten Schalters T2. Abhängig von der konkreten Dimensionierung der Komponenten der Endstufe E, insbesondere abhängig von dem Vorhandensein des optionalen Umschwingkondensators C_{U} bzw. dessen Kapazität, kann der Verlauf des Laststroms I_{L} auch mehr oder weniger stark von dem in Fig. 3 dargestellten Verlauf abweichen. Wesentlich ist jedoch, dass eine gewisse Zeit nach dem Öffnen des Schalters T1 bzw. dem Schließen des Schalters T2 der Strom wieder absinkt.

Sobald der Laststrom I_{L} die durch den Schwellwert th_{neg} definierte Minimumvorgabe Ith_{neg} erreicht, was durch das Komparatorausgangssignal c_{neg} erkannt wird, veranlasst die Steuereinheit ST ein Öffnen des Schalters T2 und nach einer vorgegebenen zeitlichen Verzögerung Δt1 ein Schließen des Schalters T1. Daraufhin steigt der Strom I_{L} wieder an.

Wie aus Fig. 3 ersichtlich, wiederholen sich die beschriebenen Vorgänge, so dass der Laststrom zwischen der Maximumvorgabe und der Minimumvorgabe pendelt. Vorzugsweise sollten etwa 5 bis 10 "Laststrompulse" innerhalb jeder ansteigenden bzw. abfallenden Flanke der Maximum- und Minimumvorgaben liegen.

Fig. 4 veranschaulicht den zeitlichen Verlauf dieser Stromvorgaben Ithₚₒₛ und Ith_{neg} für einen Ladevorgang und einen sich daran anschließenden Entladevorgang.

Während des Ladevorgangs ist die Minimumvorgabe Ith_{neg} im Wesentlichen Null, wohingegen während des Entladevorgangs die Maximumvorgabe Ithₚₒₛ im Wesentlichen Null ist. Während des Ladevorgangs steigt die Maximumvorgabe zunächst linear an (Schritt a), um dann eine Zeit lang konstant zu bleiben (Schritt b) und schließlich wieder linear abzufallen (Schritt c). Diese Vorgabe besitzt somit im zeitlichen Verlauf betrachtet die Form eines Trapezes. In ähnlicher Weise ist die Minimumvorgabe Ith_{neg} beim Entladevorgang trapezförmig, d.h. ebenfalls in drei solche Schritte a, b, c unterteilt.

Zur Einstellung eines gewünschten Ladeausmaßes, welches im dargestellten Ausführungsbeispiel z. B. eine am Ende des Ladevorgangs erreichte maximale Aktorauslenkung bzw. Aktorladung darstellt, sieht die Steuereinheit ST eine mehr oder weniger große zeitliche Überlappung Δtth des dritten Schritts c des Ladevorgangs mit dem ersten Schritt a des Entladevorgangs vor. Durch diese im Betrieb variable zeitliche Überlappung kann die Ansteuerung des Piezoaktors P mit hoher Auflösung und guter Reproduzierbarkeit erfolgen.

Es erfolgt gewissermaßen ein kontinuierlicher Wechsel vom Laden ins Entladen. In einem zeitlichen Übergangsbereich werden die verwendeten Stromvorgabewerte (obere und untere Schwellen thₚₒₛ und th_{neg}) gleichzeitig und gleichsinnig verändert. Außerhalb der Überlappungszone Δtth arbeitet die Ansteuerschaltung praktisch lediglich unter Heranziehung einer der beiden Stromvorgaben (positiv oder negativ), die als Referenzwert zur Stromregelung herangezogen werden (Prinzip des Buck- oder Boost-Konverters).

## Patentansprüche

1. Verfahren zum Ansteuern einer kapazitiven Last (P), insbesondere eines Piezoaktors für ein Einspritzventil einer Brennkraftmaschine, umfassend Ladevorgänge und Entladevorgänge zum Aufladen bzw. Entladen der kapazitiven Last (P) mittels eines Laststroms (I_{L}), der zwischen einer Maximumvorgabe (Ithₚₒₛ) und einer Minimumvorgabe (Ith_{neg}) pendeln gelassen wird, wobei während eines Ladevorgangs die Maximumvorgabe (Ithₚₒₛ) in einem ersten Schritt (a) monoton ansteigt, in einem zweiten Schritt (b) im Wesentlichen konstant bleibt und in einem dritten Schritt (c) monoton abfällt, wobei während eines Entladevorgangs die Minimumvorgabe (Ith_{neg}) in einem ersten Schritt (a) monoton abfällt, in einem zweiten Schritt (b) im Wesentlichen konstant bleibt und in einem dritten Schritt (c) monoton ansteigt **dadurch gekennzeichnet, dass** zur Einstellung eines gewünschten Ladeausmaßes eine variable zeitliche Überlappung (Δtth) des dritten Schritts (c) des Ladevorgangs und des ersten Schritts (a) des nachfolgenden Entladevorgangs vorgesehen ist.

2. Verfahren nach Anspruch 1, wobei zur Einstellung des Ladeausmaßes ferner die beim Ladevorgang am Ende des ersten Schritts (a) erreichte Maximumvorgabe (Ithₚₒₛ) und/oder die zeitliche Dauer des zweiten Schritts (b) variiert wird.

3. Verfahren nach einem der vorangehenden Ansprüche, wobei zur Einstellung des Ladeausmaßes zu variierende Parameter aus einem Kennlinienfeld ausgelesen werden.

4. Verfahren nach einem der vorangehenden Ansprüche, wobei während des Ladevorgangs die Minimumvorgabe (Ith_{neg}) im Wesentlichen Null ist und/oder während des Entladevorgangs die Maximumvorgabe (Ithₚₒₛ) im Wesentlichen Null ist.

5. Verfahren nach einem der vorangehenden Ansprüche, wobei der zeitliche Verlauf der Maximumvorgabe (Ithₚₒₛ) während des Ladevorgangs und/oder der zeitliche Verlauf der Minimumvorgabe (Ith_{neg}) während des Entladevorgangs in etwa die Form eines Trapezes besitzt.

6. Vorrichtung, umfassend Mittel zur Durchführung eines Verfahrens nach einem der Ansprüche 1 bis 5.

7. Vorrichtung nach Anspruch 6, umfassend:
- eine Endstufe (E) zur Bereitstellung des Laststroms (I_{L}) basierend auf einem der Endstufe eingegebenen Steuersignal (S; S₁, S₂), und
- eine Steuereinheit zur Bereitstellung des Steuersignals (S; S₁, S₂) basierend auf einer Ansteuervorgabe und wenigstens auf einem Messwert des tatsächlichen Laststroms (I_{L}).

## Claims

1. Method for controlling a capacitive load (P), in particular a piezo actuator for an injection valve of an internal combustion engine, comprising charging processes and discharging processes for charging and respectively discharging the capacitive load (P) by means of a load current (I_{L}), which is allowed to oscillate between a maximum default (Ithₚₒₛ) and a minimum default (Ith_{neg}), with the maximum default (Ithₚₒₛ) increasing monotonously in a first step (a), remaining essentially constant in a second step (b) and decreasing monotonously in a third step (c) during a charging process, with the minimum default (Ith_{neg}) decreasing monotonously in a first step (a), remaining essentially constant in a second step (b) and increasing monotonously in a third step (c) during a discharging process, **characterised in that** a variable temporal overlap (Δtth) of the third step (c) of the charging process and the first step (a) of the subsequent discharging process being provided to set a required degree of charging.

2. Method according to claim 1, with the maximum default (Ithₚₒₛ) achieved at the end of the first step (a) during the charging process and/or the temporal duration of the second step (b) also being varied to set the degree of charging.

3. Method according to one of the preceding claims, with parameters to be varied to set the degree of charging being read from a set of characteristic curves.

4. Method according to one of the preceding claims, with the minimum default (Ith_{neg}) being essentially zero during the charging process and/or the maximum default (Ithₚₒₛ) being essentially zero during the discharging process.

5. Method according to one of the preceding claims, with the temporal profile of the maximum default (Ithₚₒₛ) during the charging process and/or the temporal profile of the minimum default (Ith_{neg}) during the discharging process having roughly trapezoidal form.

6. Device, comprising means to implement a method as claimed in one of claims 1 to 5.

7. Device according to claim 6, comprising:
- an output stage (E) to supply the load current (I_{L}) based on a control signal (S; S₁, S₂) input to the output stage, and
- a control unit (ST) to supply the control signal (S; S₁, S₂) based on a control default and at least one measured value of the actual load current (I_{L}).

## Revendications

1. Procédé pour exciter une charge capacitive (P), en particulier d'un actionneur piézoélectrique pour une soupape d'injection d'une machine à combustion interne, comportant des opérations de charge et des opérations de décharge afin de charger resp. de décharger la charge capacitive (P) au moyen d'un courant de charge (I_{L}) qui est laissé en va-et-vient entre une valeur maximale prescrite (Ithₚₒₛ) et une valeur minimale prescrite (Ith_{neg}), dans lequel la valeur maximale prescrite (Ithₚₒₛ) augmente de manière monotone au cours d'une première étape (a), reste essentiellement constante au cours d'une seconde étape (b) et diminue de manière monotone au cours d'une troisième étape (c) pendant une opération de charge, dans lequel la valeur minimale prescrite (Ith_{neg}) diminue de manière monotone au cours d'une première étape (a), reste essentiellement constante au cours d'une seconde étape (b) et augmente de manière monotone au cours d'une troisième étape (c) pendant une opération de décharge, **caractérisé en ce que**, pour ajuster un degré de charge désiré, un chevauchement temporel variable (Δtth) de la troisième étape (c) de l'opération de charge et de la première étape (a) de l'opération de décharge qui s'ensuit, est prévu.

2. Procédé selon la revendication 1, dans lequel, pour ajuster le degré de charge désiré, la valeur maximale prescrite (Ithₚₒₛ) obtenue pendant l'opération de charge à la fin de la première étape (a) et/ou la durée temporelle de la seconde étape (b) est (sont) en outre variée(s).

3. Procédé selon l'une des revendications précédentes, dans lequel, pour ajuster le degré de charge désiré, des paramètres devant être variés sont chargés par lecture depuis un champ de courbes caractéristiques.

4. Procédé selon l'une des revendications précédentes, dans lequel la valeur minimale prescrite (Ith_{neg}) est sensiblement zéro pendant l'opération de charge et/ou dans lequel la valeur maximale prescrite (Ithₚₒₛ) est sensiblement zéro pendant l'opération de décharge.

5. Procédé selon l'une des revendications précédentes, dans lequel la courbe temporelle de la valeur maximale prescrite (Ithₚₒₛ) pendant l'opération de charge et/ou la courbe temporelle de la valeur minimale prescrite (Ith_{neg}) pendant l'opération de décharge possède (possèdent) approximativement la forme d'un trapèze.

6. Dispositif, comportant des moyens pour exécuter un procédé selon l'une des revendications 1 à 5.

7. Dispositif selon la revendication 6, comportant :
- un étage final (E) pour la mise à disposition du courant de charge (I_{L}) sur la base d'un signal de commande (S ; S₁, S₂) entré sur l'étage final, et
- une unité de commande pour la mise à disposition du signal de commande (S ; S₁, S₂) sur la base d'une valeur d'excitation prescrite et sur la base d'au moins une valeur de mesure du courant de charge réel (I_{L}).
